# EUROPEAN PATENT APPLICATION

(11) **EP 4 696 653 A1**
(43) Date of publication of application: **18.02.2026**
(21) Application number: 24788601.3
(22) Date of filing: 29.03.2024
(51) Int. Cl.: C01B 32/50, B01D 53/04, F25J 1/00, F25J 3/04

(54) **FACILITY FOR PRODUCING LIQUEFIED CARBON DIOXIDE, AND METHOD FOR PRODUCING LIQUEFIED CARBON DIOXIDE**

(30) Priority: 12.04.2023 JP 2023064761
(71) Applicant: Air Water Inc., Osaka-shi Osaka 542-0081 (JP)
(72) Inventor: KAIGAWA, Takanori, Sakai-shi, Osaka 592-8331 (JP); MAEHARA, Taisei, Sakai-shi, Osaka 592-8331 (JP); TANAKA, Koji, Osaka-shi, Osaka 542-0081 (JP)
(74) Representative: Grünecker Patent- und Rechtsanwälte PartG mbB
(86) International application number: PCT/JP2024/013154
(87) International publication number: WO 2024/214574

(57) **Abstract**

A production facility (100) for liquefied carbon dioxide gas includes a combustion facility (200) for burning a combustible material, a generation apparatus (300) for generating oxygen, and a supply mechanism (400) for returning combustion gas generated by burning the combustible material in the combustion facility (200) to the combustion facility (200) and supplying the oxygen to the combustion facility (200), and a production apparatus (500) for producing liquefied carbon dioxide gas from the combustion gas generated by the combustion facility (200).

## Description

### Technical Field

The present disclosure relates to a production facility for liquefied carbon dioxide gas and a production method for liquefied carbon dioxide gas.

### Background Art

Liquefied carbon dioxide gas is, for example, produced from by-product gases that are generated in refineries and the like. In recent years, demand for gasoline and heavy oil has decreased, leading also to a decline in the operating rate of refineries. Consequently, the production of liquefied carbon dioxide gas is also declining, and supply is tight.

On the other hand, combustion facilities such as woody biomass power plants and waste incinerators generate large amounts of carbon dioxide gas (carbon dioxide, CO₂). However, the concentration of carbon dioxide gas in combustion gas generated by a combustion facility is about 10%. Producing liquefied carbon dioxide gas from combustion gas having a low concentration of carbon dioxide gas requires a large facility.

In this regard, JP 2005-083643A (Patent Document 1) discloses a combustion method with which the concentration of carbon dioxide gas in the combustion gas rises. With this combustion method, a mixture of high-purity oxygen gas and high-purity carbon dioxide gas is supplied to a combustion furnace. The carbon dioxide gas is supplied from carbon dioxide gas cylinders. Patent Document 1 discloses that the carbon dioxide gas concentration in the gas mixture is 67.9%, whereas the carbon dioxide gas concentration in the combustion gas generated by burning the gas mixture is 95.56%.

### Citation List

### Patent Document

Patent Document 1: JP 2005-083643A

### Summary of Invention

### Technical Problem

The combustion method disclosed in Patent Document 1 is intended to improve combustion efficiency in a combustion furnace by supplying carbon dioxide gas from carbon dioxide gas cylinders, and is not intended to produce liquefied carbon dioxide gas. Thus, the combustion method disclosed in Patent Document 1 is not able to address the shortage of liquefied carbon dioxide gas. Accordingly, there is a desire for a technology capable of producing liquefied carbon dioxide gas with a different method from that used previously.

### Solution to Problem

In one example of the present disclosure, a production facility for liquefied carbon dioxide gas is provided. This production facility includes a combustion facility for burning a combustible material, a generation apparatus for generating oxygen, a supply mechanism for returning combustion gas generated by burning the combustible material in the combustion facility to the combustion facility and supplying the oxygen to the combustion facility, and a production apparatus for producing liquefied carbon dioxide gas from the combustion gas generated by the combustion facility.

In the one example of the present disclosure, the supply mechanism may include a first pipe connecting the combustion facility to the production apparatus, a second pipe connecting the combustion facility to the generation apparatus, and a third pipe branching from the first pipe and connected to the second pipe.

In the one example of the present disclosure, production facility may further include a sensor for detecting a carbon dioxide gas concentration of the combustion gas, a valve configured to open and close a flow channel between a branch point of the first and third pipes and the production apparatus, and a controller configured to control the valve. The controller may control the valve to change the flow channel from closed to open when the carbon dioxide gas concentration increases to a predetermined value or more.

In the one example of the present disclosure, the supply mechanism may be configured to start supply of the oxygen to the combustion facility, after a predetermined time period from when the combustion facility starts burning the combustible material.

In the one example of the present disclosure, the generation apparatus may be a cryogenic separation apparatus configured to produce the oxygen from air by a cryogenic separation method.

In the one example of the present disclosure, the cryogenic separation apparatus may be configured to further produce at least one of liquid oxygen, liquid argon, and liquid nitrogen from the air by the cryogenic separation method.

In the one example of the present disclosure, the generation apparatus may be an adsorption separation apparatus configured to produce the oxygen from air by an adsorption separation method.

In another example of the present disclosure, a production method for liquefied carbon dioxide gas is provided. This production method includes a step of burning a combustible material in a combustion facility, a step of generating oxygen, a step of returning combustion gas generated by burning the combustible material in the combustion facility to the combustion facility and supplying the oxygen to the combustion facility, and a step of producing liquefied carbon dioxide gas from the combustion gas generated by the combustion facility.

The above and other objects, features, aspects and advantages of the present invention will become apparent from the following detailed description relating to the invention, taken in conjunction with the attached drawings.

### Brief Description of Drawings

FIG. 1 is a diagram showing an example of the configuration of a production facility.
FIG. 2 is a diagram showing a process of circulating combustion gas.
FIG. 3 is a diagram showing a process in which combustion gas in a combustion facility is sent to a production apparatus.
FIG. 4 is a schematic diagram showing an example of the hardware configuration of a controller.
FIG. 5 is a diagram showing an example of the apparatus configuration of a cryogenic separation apparatus.
FIG. 6 is a diagram showing an example of the apparatus configuration of an adsorption separation apparatus.
FIG. 7 is a diagram for describing the apparatus configuration of a supply mechanism.
FIG. 8 is a diagram showing a cross-section of a mixing mechanism.
FIG. 9 is a diagram showing an example of the apparatus configuration of the production apparatus.
FIG. 10 is a diagram showing an example of the apparatus configuration of the production apparatus.
FIG. 11 is a flowchart showing the flow of control processing of the production facility.
FIG. 12 is a diagram showing simulation results with a graph.

### Description of Embodiments

Hereinafter, embodiments according to the present invention will be described, with reference to the drawings. In the following description, components and constituent elements that are the same are given the same reference signs. The names and functions thereof are also the same. Accordingly, detailed description thereof will not be repeated. Note that the embodiments and variations described below may be selectively combined as appropriate.

### <A. Production Facility 100>

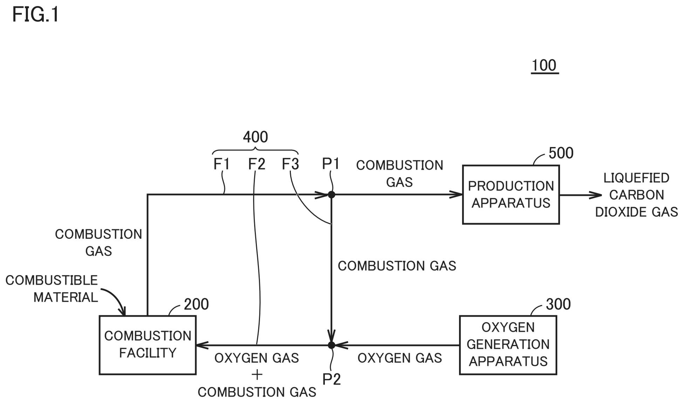

First, a production facility 100 for liquefied carbon dioxide gas will be described, with reference to FIG. 1. FIG. 1 is a diagram showing an example of the configuration of the production facility 100.

As shown in FIG. 1, the production facility 100 includes a combustion facility 200, an oxygen generation apparatus 300, a supply mechanism 400, and a production apparatus 500.

The combustion facility 200 is a facility for burning a combustible material. As one example, the combustion facility 200 is a woody biomass power plant that burns wood chips as the combustible material. As another example, the combustion facility 200 is a waste incinerator that burns waste as the combustible material. By burning the combustible material, combustion gas, which is exhaust gas, is generated by the combustion facility 200.

The oxygen generation apparatus 300 is an apparatus for generating oxygen gas. As one example, the oxygen generation apparatus 300 is a cryogenic separation apparatus that produces oxygen gas from air with a cryogenic separation method. The oxygen generation apparatus 300 will be described in detail below.

The supply mechanism 400 is a mechanism for returning combustion gas generated by burning the combustible material in the combustion facility 200 to the combustion facility 200, and for supplying oxygen gas generated by the oxygen generation apparatus 300 to the combustion facility 200. That is, the supply mechanism 400 supplies a mixture of combustion gas and oxygen gas to the combustion facility 200. The concentration of carbon dioxide gas in the combustion gas is enhanced, by the gas mixture being continually supplied to the combustion facility 200.

The production apparatus 500 is an apparatus for producing liquefied carbon dioxide gas from the combustion gas generated by the combustion facility 200. The production apparatus 500 produces liquefied carbon dioxide gas from the combustion gas whose carbon dioxide gas concentration has been enhanced.

The liquefied carbon dioxide gas is, for example, filled into gas cylinders, low-temperature containers or the like, and is thereafter shipped as a product. Alternatively, the liquefied carbon dioxide gas can be utilized in the production of dry ice, chemical products, and the like.

As described above, the production facility 100 raises the concentration of carbon dioxide gas in the combustion gas, utilizing the combustion gas generated by the combustion facility 200. That is, the production facility 100 is able to raise the carbon dioxide gas concentration in the combustion gas, without supplying carbon dioxide gas from gas cylinders or the like. Liquefied carbon dioxide gas with high purity is thereby produced.

Also, the combustion gas whose carbon dioxide gas concentration has been enhanced is sent to the production apparatus 500, thus facilitating the production of liquefied carbon dioxide gas in the production apparatus 500. As a result, the configuration of the production apparatus 500 can be simplified, and the equipment scale of the production apparatus 500 can be reduced.

Note that any mechanism can be employed for the gas mixture supply mechanism 400. As one example, the supply mechanism 400 is constituted by pipes F1 to F3.

The pipe F1 (first pipe) connects the combustion facility 200 to the production apparatus 500. The pipe F1 need only be capable of directing combustion gas from the combustion facility 200 to the production apparatus 500, and may be constituted by a single pipe or by a plurality of pipes.

The pipe F2 (second pipe) connects the combustion facility 200 to the oxygen generation apparatus 300. The pipe F2 need only be capable of directing oxygen gas from the oxygen generation apparatus 300 to the combustion facility 200, and may be constituted by a single pipe or by a plurality of pipes.

The pipe F3 (third pipe) branches from a branch point P1 on the pipe F1 and is connected to a branch point P2 on the pipe F2. As a result of the pipe F3 connecting the branch point P1 on the pipe F1 to the branch point P2 on the pipe F2, a flow channel for circulating combustion gas within the production facility 100 is formed. Note that the pipe F3 may be constituted by a single pipe or by a plurality of pipes.

The combustion gas generated by the combustion facility 200 flows in order of the pipe F1, the pipe F3, and the pipe F2, and is returned to the combustion facility 200. On the other hand, the oxygen gas generated by the oxygen generation apparatus 300 is supplied to the combustion facility 200 via the pipe F2. The supply mechanism 400 thereby continually supplies a mixture of combustion gas and oxygen gas to the combustion facility 200.

### <B. Valve Control>

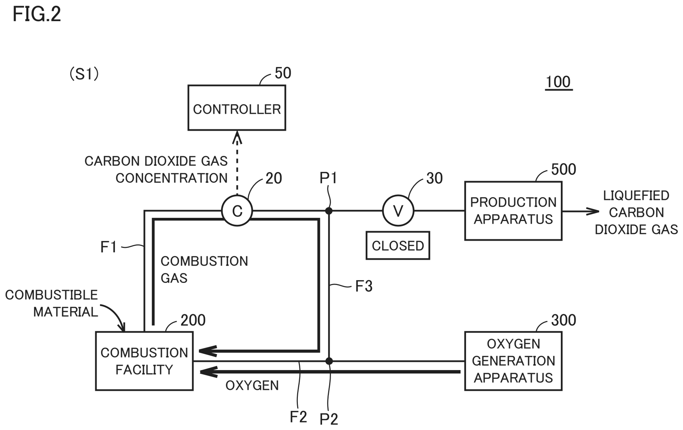

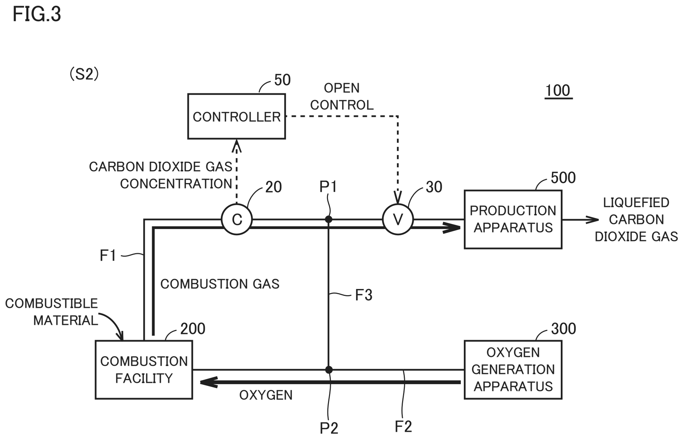

Next, the timing of switching from a process of circulating combustion gas to a process of producing liquefied carbon dioxide gas will be described, with reference to FIGS. 2 and 3. FIG. 2 is a diagram showing process S1 of circulating combustion gas. FIG. 3 is a diagram showing process S2 in which combustion gas in the combustion facility 200 is sent to the production apparatus 500.

The production facility 100 includes a concentration sensor 20, a valve 30, and a controller 50 as configuration for controlling the flow of combustion gas.

The concentration sensor 20 is a sensor for detecting the concentration of carbon dioxide gas in the combustion gas generated by the combustion facility 200. The concentration sensor 20 can be installed at any position where the carbon dioxide gas concentration in the combustion gas is detectable. In the example of FIG. 3, the concentration sensor 20 is provided on the pipe F1 between the combustion facility 200 and the branch point P1. As another example, the concentration sensor 20 may be provided on the pipe F3. The carbon dioxide gas concentration detected by the concentration sensor 20 is output to the controller 50.

Note that the type of concentration sensor 20 is not specifically limited. As one example, the concentration sensor 20 is an NDIR (Non-Dispersive Infrared) sensor. As another example, the concentration sensor 20 is a photoacoustic sensor.

The valve 30 is configured to open and close the flow channel between the branch point P1 and the production apparatus 500. The valve 30 can be installed at any position where it is possible to block the supply of combustion gas to the production apparatus 500. In the example of FIG. 3, the valve 30 is provided on the pipe F1 between the branch point P1 and the production apparatus 500.

The valve 30 is configured to switch between at least the two states of open and closed, according to a control instruction from the controller 50. The degree of opening of the valve 30 may be adjustable or may be fixed.

When the valve 30 is closed, supply of combustion gas to the production apparatus 500 is blocked. In this case, the combustion gas generated by the combustion facility 200 circulates in the following order: pipe F1 → pipe F3 → pipe F2 → combustion facility 200. On the other hand, when the valve 30 is open, the combustion gas is sent from the branch point P1 to the production apparatus 500.

The controller 50 controls the opening and closing of the valve 30 according to the carbon dioxide gas concentration detected by the concentration sensor 20. The apparatus configuration of the controller 50 is not specifically limited. The controller 50 may be constituted by a single control unit or by a plurality of control units. As one example, the controller 50 is a PLC (Programmable Logic Controller).

In process S1, the controller 50 sequentially acquires the carbon dioxide gas concentration from the concentration sensor 20. At this time, it is assumed that the carbon dioxide gas concentration does not exceed a predetermined threshold value. In this case, the controller 50 closes the valve 30 such that the combustion gas does not flow to the production apparatus 500.

Next, it is assumed that, in process S2, the carbon dioxide gas concentration detected by the concentration sensor 20 exceeds the predetermined threshold value. The threshold value is a value from 80% or more to 95% or less. When the carbon dioxide gas concentration exceeds the predetermined threshold value, the controller 50 controls the valve 30 such that the flow channel between the branch point P1 and the production apparatus 500 changes from closed to open. Combustion gas is thereby supplied to the production apparatus 500. The production apparatus 500 produces liquefied carbon dioxide gas from the supplied combustion gas.

### <C. Hardware Configuration>

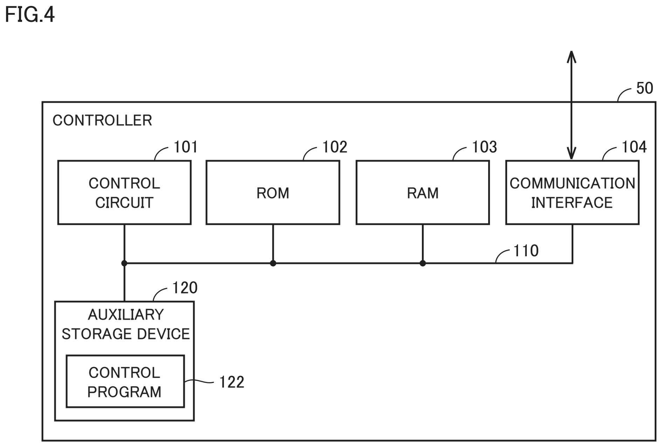

Next, the hardware configuration of the controller 50 shown in FIGS. 2 and 3 mentioned above will be described, with reference to FIG. 4. FIG. 4 is a schematic diagram showing an example of the hardware configuration of the controller 50.

The controller 50 includes a control circuit 101, a ROM (Read Only Memory) 102, a RAM (Random Access Memory) 103, a communication interface 104, and an auxiliary storage device 120. These components are connected to a bus 110.

The control circuit 101 is, for example, constituted by at least one integrated circuit. The integrated circuit can, for example, be constituted by at least one CPU (Central Processing Unit), at least one GPU (Graphics Processing Unit), at least one ASIC (Application Specific Integrated Circuit), at least one FPGA (Field Programmable Gate Array), or a combination thereof.

The control circuit 101 controls the operations of the controller 50 by executing various programs such as a control program 122. The control program 122 is a program for realizing the processes shown in FIGS. 2 and 3 mentioned above. The control circuit 101 reads out the control program 122 from the auxiliary storage device 120 or the ROM 102 to the RAM 103, based on receiving a command to execute the control program 122. The RAM 103 functions as a working memory and temporarily stores various data required in execution of the control program 122.

The communication interface 104 is an interface for periodic communication with an external device using a field network. The external device includes the abovementioned concentration sensor 20 and the abovementioned valve 30, for example. As the field network, EtherCAT (registered trademark), EtherNet/IP (registered trademark), CC-Link (registered trademark), or CompoNet (registered trademark), for example, is employed.

The auxiliary storage device 120 is a storage medium such as a hard disk or a flash memory, for example. The auxiliary storage device 120 stores the control program 122 and the like. Note that the control program 122 is not limited to being stored in the auxiliary storage device 120, and may be stored in a storage area (e.g., cache memory, etc.) of the control circuit 101, or in the ROM 102, the RAM 103, an external device (e.g., server), or the like.

The control program 122 may be provided as part of another program, rather than as a stand-alone program. In this case, the various types of processing according to the present embodiment are realized in cooperation with the other program. Even a program that does not include all of such modules does not depart from the spirit of the control program 122 according to the present embodiment. Furthermore, at least some of the functions provided by the control program 122 may be realized by dedicated hardware. Furthermore, the controller 50 may be constituted in the form of a so-called cloud service in which at least one server executes some of the processing of the control program 122.

### <D. Combustion Facility 200>

Next, the combustion facility 200 shown in FIG. 1 mentioned above will be described in greater detail.

As mentioned above, the combustion facility 200 is a facility for burning a combustible material. As one example, the combustion facility 200 is a woody biomass power plant that burns wood chips as the combustible material.

The combustion facility 200 serving as a woody biomass power plant is constituted by a combustion furnace, a boiler, and the like, for example. The combustion furnace generates high-temperature combustion gas by burning wood chips introduced into the furnace. The boiler exhausts heat from the high-temperature combustion gas and utilizes the exhaust heat to convert water into steam. The steam is utilized to generate electricity. As one example, the combustion facility 200 utilizes the generated steam to rotate a turbine and generate power. The combustion gas from which heat has been exhausted is sent to the pipe F1.

### <E. Oxygen Generation Apparatus 300>

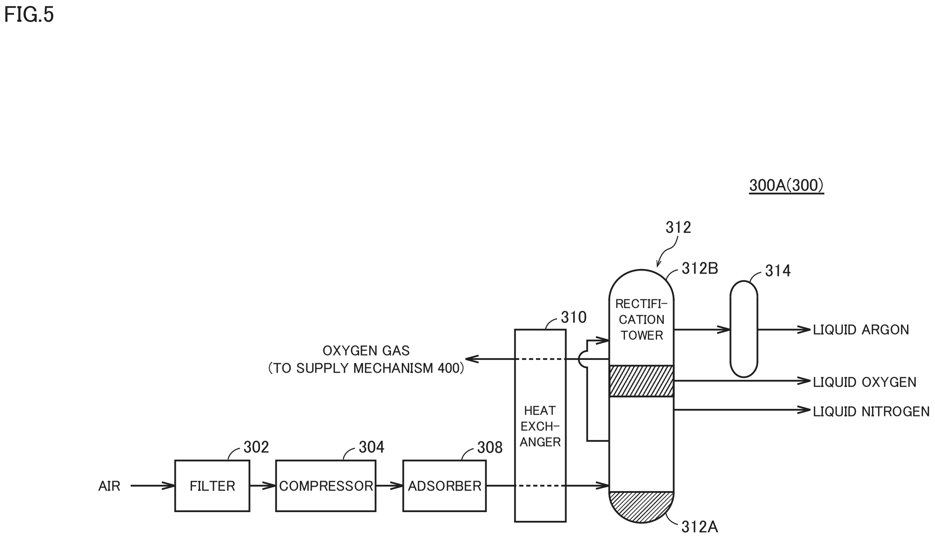

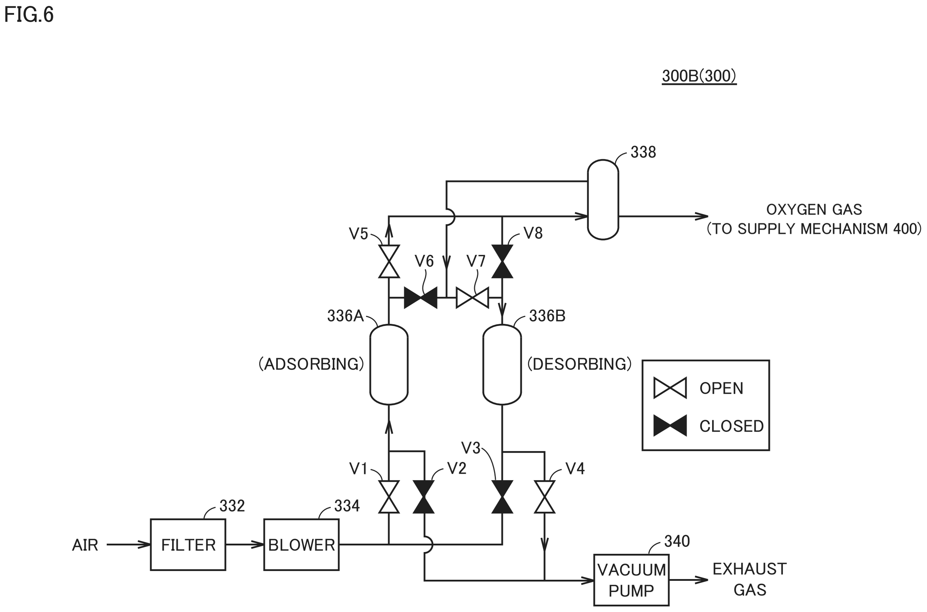

Next, the oxygen generation apparatus 300 shown in FIG. 1 mentioned above will be further described, with reference to FIGS. 5 and 6.

As mentioned above, the oxygen generation apparatus 300 is an apparatus for generating oxygen gas. The type of oxygen generation apparatus 300 is not specifically limited, and any apparatus capable of generating oxygen gas can be employed as the oxygen generation apparatus 300.

As one example, the oxygen generation apparatus 300 may be an apparatus that produces oxygen gas from air by a cryogenic separation method, an apparatus that produces oxygen gas from air by an adsorption separation method, or an apparatus that produces oxygen gas from air by a membrane separation method.

Hereinafter, a cryogenic separation apparatus and an adsorption separation apparatus will be described in this order.

### (E1. Cryogenic Separation Apparatus 300A)

First, a cryogenic separation apparatus 300A, which is one example of the oxygen generation apparatus 300, will be described, with reference to FIG. 5. FIG. 5 is a diagram showing an example of the apparatus configuration of the cryogenic separation apparatus 300A.

The cryogenic separation apparatus 300A separates oxygen gas from air, utilizing the difference in boiling points of the various gases (e.g., oxygen gas, nitrogen gas, argon gas, etc.) contained in the air. Such a separation method is called a cryogenic separation method.

As one example, the cryogenic separation apparatus 300A is constituted by a filter 302, a compressor 304, an adsorber 308, a heat exchanger 310, a rectification tower 312, and an argon purification apparatus 314.

First, air taken into the cryogenic separation apparatus 300A is sent to the filter 302. The filter 302 removes impurities from the intake air. The air from which impurities have been removed is sent to the compressor 304.

The compressor 304 compresses the air from which impurities have been removed into a state in which the various gases contained in the air are readily liquefiable. As one example, the compressor 304 pressurizes the air to about 0.5 MPa. The compressed air is sent to the adsorber 308.

The adsorber 308 removes moisture and carbon dioxide gas from the compressed air sent from the compressor 304 through adsorption. The TSA (Thermal Swing Adsorption) method, for example, is employed as the adsorption removal method.

The adsorber 308 employing the TSA method has two adsorption towers. While one adsorption tower is adsorbing moisture and carbon dioxide gas, the other adsorption tower releases previously adsorbed moisture and carbon dioxide gas into the atmosphere. The adsorption towers remove moisture and carbon dioxide gas from compressed air through adsorption, by alternately performing adsorption and release repeatedly. Thereafter, the compressed air that has passed through the adsorber 308 is sent to the heat exchanger 310.

The heat exchanger 310 performs heat exchange between the air sent from the adsorber 308 and the oxygen gas shown in FIG. 5, and cools the air to about -180°C. As a result, various gases contained in the air (e.g., oxygen gas, nitrogen gas, argon gas, etc.) are liquefied and sent to the rectification tower 312 as liquefied air.

The rectification tower 312 purifies the oxygen gas, the liquid oxygen, the liquid nitrogen, the liquid argon, and the like from the liquid air, utilizing the difference in the boiling points of the various gases. Note that the boiling point of liquid nitrogen under atmospheric pressure is -195.8°C, the boiling point of liquid argon under atmospheric pressure is -185.7°C, and the boiling point of liquid oxygen under atmospheric pressure is -183.0°C.

The rectification tower 312 is, for example, constituted by a lower tower 312A and an upper tower 312B. The liquid air is sent to the lower tower 312A. The lower tower 312A is a high-pressure tower having a higher internal pressure than the upper tower 312B.

The bottom portion of the upper tower 312B is thermally connected to the top portion of the lower tower 312A by a condenser (not shown). By supplying heat from the lower tower 312A to the upper tower 312B in the form of latent heat, the nitrogen gas accumulating in the top portion of the lower tower 312A is condensed and reflux liquid nitrogen is generated. The liquid nitrogen accumulates in a storage chamber (not shown) provided in an upper portion of the lower tower 312A. The liquid nitrogen is removed from the upper portion of the lower tower 312A and filled into containers such as gas cylinders or low-temperature containers, and is thereafter shipped as a product.

The liquid air accumulating in the bottom portion of the lower tower 312A is sent to the upper tower 312B. Due to the difference in the boiling points of the various gases, liquid oxygen accumulates in the bottom portion of the upper tower 312B. The liquid oxygen is removed from the bottom portion of the upper tower 312B and filled into containers such as gas cylinders or low-temperature containers, and is thereafter shipped as a product.

Also, by supplying heat from the lower tower 312A to the upper tower 312B in the form of latent heat, the liquid oxygen vaporizes in the bottom portion of the upper tower 312B, and high-purity oxygen gas is generated on the liquid oxygen. The oxygen gas is removed from the upper tower 312B and sent to the heat exchanger 310. The heat exchanger 310 performs heat exchange between this oxygen gas and air sent from the adsorber 308 and increases the temperature of the oxygen gas. The oxygen gas that has passed through the heat exchanger 310 is sent to the supply mechanism 400 via the abovementioned pipe F2.

Also, an intermediate portion of the upper tower 312B is connected to the argon purification apparatus 314 by a pipe. Crude argon present in the intermediate portion of the upper tower 312B is supplied to the argon purification apparatus 314. The argon purification apparatus 314 produces liquefied argon from the crude argon. The liquid argon is, for example, filled into gas cylinders, low-temperature containers or the like, and is thereafter shipped as a product.

### (E2. Adsorption Separation Apparatus 300B)

Next, an adsorption separation apparatus 300B, which is another example of the oxygen generation apparatus 300, will be described, with reference to FIG. 6. FIG. 6 is a diagram showing an example of the apparatus configuration of the adsorption separation apparatus 300B.

The adsorption separation apparatus 300B separates oxygen gas from air, utilizing the difference in the adsorption characteristics of the gases with respect to an adsorbent.

As one example, the adsorption separation apparatus 300B is constituted by a filter 332, a blower 334, adsorption towers 336A and 336B, a surge tank 338, a vacuum pump 340, and valves V1 to V8.

The blower 334 is a type of air blower and takes air into the adsorption separation apparatus 300B from outside. The air taken in is sent to the filter 332. The filter 332 removes unwanted gases such as nitrogen gas from the air.

The air that has passed through filter 332 is sent to one of the adsorption towers 336A and 336B. The destination of the air is switched according to the opening and closing of the valves V1 to V8. In the example in FIG. 6, the valves V1, V4, V5, and V7 are controlled to be open, and the valves V2, V3, V6, and V8 are controlled to be closed. In this case, the air is directed to the adsorption tower 336A.

In the adsorption tower 336A, nitrogen gas and impurities such as moisture are adsorbed by an adsorbent. On the other hand, oxygen gas, which is not readily adsorbed by the adsorbent, passes through the adsorption tower 336A and is sent to the surge tank 338. Thereafter, some of the oxygen gas sent to the surge tank 338 is sent to the supply mechanism 400 via the abovementioned pipe F2. Meanwhile, the remaining oxygen gas is sent to the other adsorption tower 336B.

The vacuum pump 340 depressurizes the adsorption tower 336B and unwanted gases adsorbed by the adsorbent within the adsorption tower 336B last time are desorbed from the adsorbent. The unwanted gases that are desorbed are discharged into the atmosphere as exhaust gas.

Thereafter, the adsorption separation apparatus 300B reverses the opening and closing of the valves V1 to V8. That is, the valves V1, V4, V5, and V7 are switched from open to closed, and the valves V2, V3, V6, and V8 are switched from closed to open. As a result, the functions of the adsorption towers 336A and 336B are reversed. That is, the adsorption tower 336B functions to separate the oxygen gas by removing unwanted gases from the air, and the adsorption tower 336A functions to desorb the unwanted gases from the adsorbent.

In this way, the adsorption separation apparatus 300B purifies the oxygen gas by alternately adsorbing and desorbing unwanted gases repeatedly between the adsorption towers 336A and 336B.

### <F. Supply Mechanism 400>

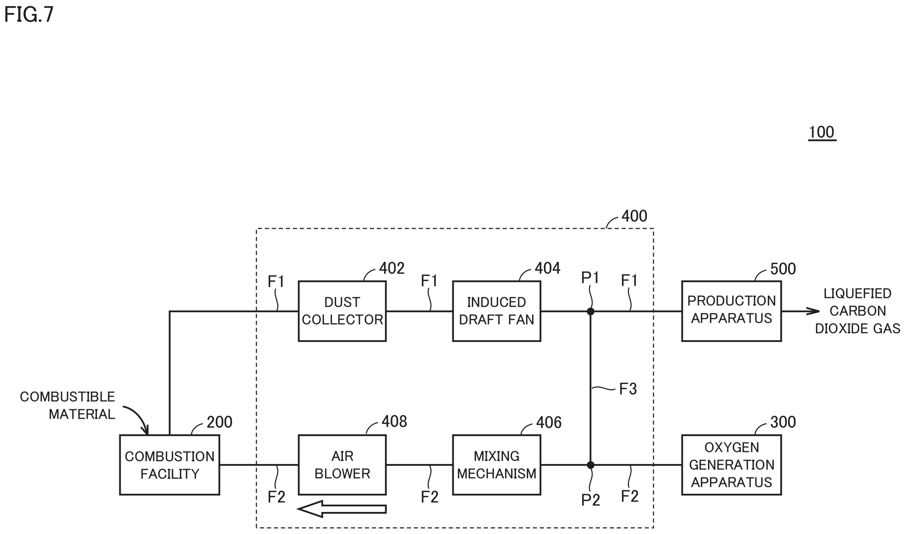

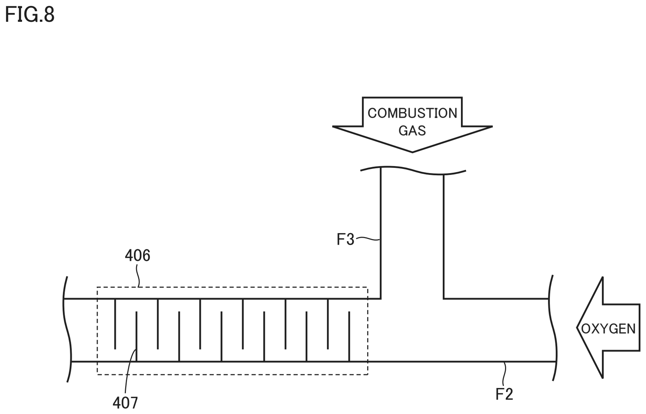

Next, the abovementioned supply mechanism 400 will be further described, with reference to FIGS. 7 and 8. FIG. 7 is a diagram for describing the apparatus configuration of the supply mechanism 400.

As shown in FIG. 7, the supply mechanism 400 includes a dust collector 402, an induced draft fan 404, a mixing mechanism 406, and an air blower 408. The dust collector 402 and induced draft fan 404 are provided on the pipe F1, for example. The mixing mechanism 406 and the air blower 408 are provided on the pipe F2.

The dust collector 402 is, for example, a filtration dust collector. The dust collector 402 removes particulate matter from the combustion gas generated by the combustion facility 200. Particulate matter is fine particles that are generated when the combustion facility 200 burns the combustible material. These fine particles include smoke, soot, and dust, for example. The combustion gas from which particulate matter has been removed is sent to the induced draft fan 404 via the pipe F1.

The induced draft fan 404 is a type of air blower and sends combustion gas that has passed through dust collector 402 to a stack (not shown). Some of the combustion gas is thereby released into the atmosphere from the stack. Meanwhile, the remaining combustion gas is sent to the mixing mechanism 406 or the production apparatus 500.

The mixing mechanism 406 is a mechanism for mixing the combustion gas sent from the induced draft fan 404 with the oxygen gas generated by the oxygen generation apparatus 300. Any mechanism capable of mixing combustion gas and oxygen gas can be employed for the mixing mechanism 406.

An example of the mixing mechanism 406 will be described, with reference to FIG. 8. FIG. 8 is a diagram showing a cross-section of the mixing mechanism 406.

In the example of FIG. 8, a plurality of baffle plates 407 are provided inside the mixing mechanism 406. The baffle plates 407 are each provided inside the pipe F2 to impede the flow of gas. The combustion gas and the oxygen gas are thereby efficiently mixed inside the pipe F2. Note that this mixing method is one example, and a mixing nozzle or the like may be used to mix the combustion gas with the oxygen gas.

Referring again to FIG. 7, the air blower 408 sends the gas mixture mixed by the mixing mechanism 406 to the combustion facility 200. The air blower 408 is constituted by a fan, for example. As a result of the air blower 408, the circulation of combustion gas from the combustion facility 200, through the pipes F1, F3 and F2, and back to the combustion facility 200 and the supply of oxygen gas to the combustion facility 200 are performed more efficiently.

### <G. Production Apparatus 500>

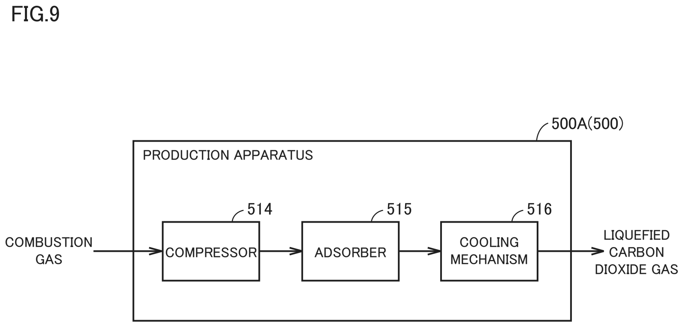

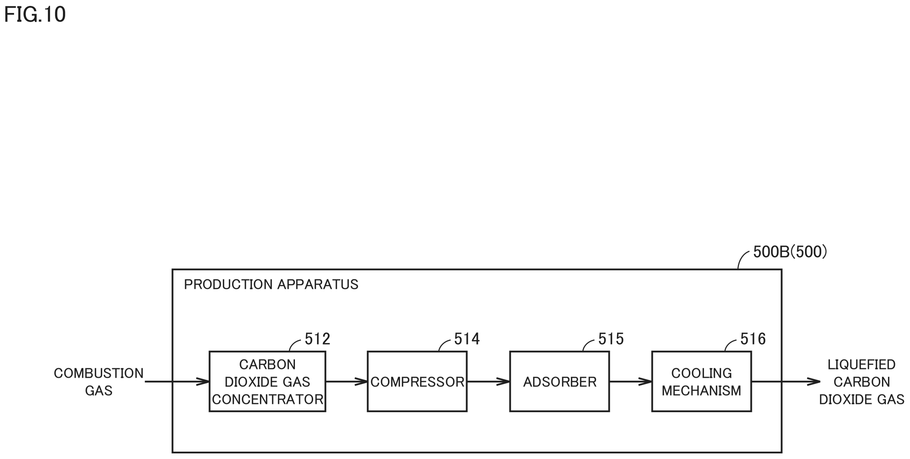

Next the production apparatus 500 shown in FIG. 1 mentioned above will be further described, with reference to FIGS. 9 and 10.

As mentioned above, the production apparatus 500 is an apparatus for producing liquefied carbon dioxide gas from combustion gas generated by the combustion facility 200. The apparatus configuration of the production apparatus 500 is not specifically limited, and any apparatus configuration capable of producing liquefied carbon dioxide gas from combustion gas may be employed for the production apparatus 500.

As one example, the apparatus configuration of the production apparatus 500 is determined according to the type of oxygen generation apparatus 300. Hereinafter, the apparatus configuration of the production apparatus 500 that depends on the type of oxygen generation apparatus 300 will be described.

### (G1. Production Apparatus 500A)

First, a production apparatus 500A in the case where the abovementioned cryogenic separation apparatus 300A (see FIG. 5) is employed as the oxygen generation apparatus 300 will be described, with reference to FIG. 9. FIG. 9 is a diagram showing an example of the apparatus configuration of the production apparatus 500A.

In the case where the cryogenic separation apparatus 300A is employed as the oxygen generation apparatus 300, the cryogenic separation apparatus 300A is able to supply high-purity oxygen gas to the combustion facility 200. As a result, the concentration of carbon dioxide gas in the combustion gas generated by the combustion facility 200 increases. As one example, the carbon dioxide gas concentration in the combustion gas increases to 90% or more. Thus, the production apparatus 500Ais able to produce liquefied carbon dioxide gas from combustion gas, without using a concentration mechanism such as an adsorption separation apparatus or an amine absorption apparatus. That is, the production apparatus 500A is able to produce liquefied carbon dioxide gas by directly compressing and cooling the combustion gas supplied from the combustion facility 200.

In the example shown in FIG. 9, the production apparatus 500A is constituted by a compressor 514, an adsorber 515, and a cooling mechanism 516.

The compressor 514 compresses the combustion gas into a state in which the combustion gas is readily liquefiable. The compressed combustion gas is sent to the adsorber 515.

The adsorber 515 removes moisture from the combustion gas sent from the compressor 514 through adsorption. The TSA method, for example, is employed as the adsorption removal method.

The adsorber 515 employing the TSA method has two adsorption towers. While one adsorption tower is adsorbing moisture, the other adsorption tower releases moisture adsorbed last time into the atmosphere. The adsorption towers remove moisture from the compressed combustion gas through adsorption, by alternately performing adsorption and release repeatedly. Thereafter, the combustion gas that has passed through the adsorber 515 is sent to the cooling mechanism 516.

The cooling mechanism 516 cools the combustion gas that has passed through the adsorber 515. Any method of cooling the combustion gas may be employed. As one example, the cooling mechanism 516 cools the combustion gas by performing heat exchange between a refrigerant and the combustion gas using a heat exchanger. A CFC refrigerant or an NH₃ refrigerant, for example, is used as the refrigerant.

The production apparatus 500A liquefies the carbon dioxide gas contained in combustion gas such as described above, by compressing and cooling the combustion gas. The production apparatus 500A is thereby able to produce liquefied carbon dioxide gas directly from the combustion gas.

Note that, as described in FIG. 5 mentioned above, the cryogenic separation apparatus 300A can not only separate oxygen gas from air but can also produce liquid oxygen, liquid argon, and liquid nitrogen from air. Thus, with the production facility 100 according to the present embodiment, the production apparatus 500A is able to produce liquefied carbon dioxide gas, and the cryogenic separation apparatus 300A is able to jointly produce liquid oxygen, liquid argon, and liquid nitrogen.

Note that the above was described on the premise that the cryogenic separation apparatus 300Ajointly produces three products, namely, liquid oxygen, liquid argon, and liquid nitrogen, but the cryogenic separation apparatus 300A may be configured to jointly produce at least one of liquid oxygen, liquid argon, and liquid nitrogen.

That is, the cryogenic separation apparatus 300A may be configured to jointly produce only liquid oxygen. Alternatively, the cryogenic separation apparatus 300A may be configured to jointly produce only liquid argon. Alternatively, the cryogenic separation apparatus 300A may be configured to jointly produce only liquid nitrogen. Alternatively, the cryogenic separation apparatus 300A may be configured to jointly produce two out of liquid oxygen, liquid argon, and liquid nitrogen.

### (G2. Production Apparatus 500B)

Next, the production apparatus 500B in the case where the abovementioned adsorption separation apparatus 300B (see FIG. 6) is employed as the oxygen generation apparatus 300 will be described, with reference to FIG. 10. FIG. 10 is a diagram showing an example of the apparatus configuration of the production apparatus 500B.

In the abovementioned adsorption separation apparatus 300B, the concentration of air-derived nitrogen in the combustion gas could possibly increase, resulting in the concentration of carbon dioxide gas in the combustion gas only rising to about 80%. Thus, the production apparatus 500B enhances the carbon dioxide gas concentration in the combustion gas to 90% or more using a concentration mechanism such as an adsorption separation apparatus or an amine absorption apparatus. In addition, the production apparatus 500B compresses and cools the combustion gas and produces liquefied carbon dioxide gas from the combustion gas.

In the example shown in FIG. 10, the production apparatus 500B is constituted by a carbon dioxide gas concentrator 512, a compressor 514, an adsorber 515, and a cooling mechanism 516. The production apparatus 500B differs from the production apparatus 500A shown in FIG. 9 in being additionally provided with a carbon dioxide gas concentrator 512.

The carbon dioxide gas concentrator 512 adsorbs carbon dioxide gas contained in the combustion gas. The PSA (Pressure Swing Adsorption) method, for example, is employed as the method of adsorbing carbon dioxide gas. The carbon dioxide gas concentrator 512 has two or more adsorption towers. The adsorption towers each repeatedly perform a process of adsorbing carbon dioxide gas in the gas, a purge process of returning recovered carbon dioxide gas to the tower and replacing the gas remaining in the void with carbon dioxide gas, a process of reducing the pressure in the tower with a vacuum pump and recovering desorbed carbon dioxide gas, and a repressurization process of returning the pressure in the tower to normal pressure such that gas can again be received in the tower. The concentrated combustion gas is sent to the compressor 514.

The compressor 514 compresses the concentrated combustion gas into a state in which the combustion gas is readily liquefiable. The compressed combustion gas is sent to the adsorber 515.

The adsorber 515 removes moisture from the combustion gas sent from the compressor 514 through adsorption. The TSA method, for example, is employed as the adsorption removal method. The method of removing moisture by the TSA method is as described above. The combustion gas that has passed through the adsorber 515 is sent to the cooling mechanism 516.

The cooling mechanism 516 cools the combustion gas that has passed through the adsorber 515. Any method of cooling the combustion gas may be employed. As one example, the cooling mechanism 516 cools the combustion gas by performing heat exchange between a refrigerant and the combustion gas using a heat exchanger. A CFC refrigerant or an NH₃ refrigerant, for example, is used as the refrigerant.

The production apparatus 500B liquefies the carbon dioxide gas contained in combustion gas such as described above, by compressing and cooling the combustion gas. The production apparatus 500A is thereby able to produce liquefied carbon dioxide gas from the combustion gas.

### <H. Production Flow of Liquefied Carbon Dioxide Gas>

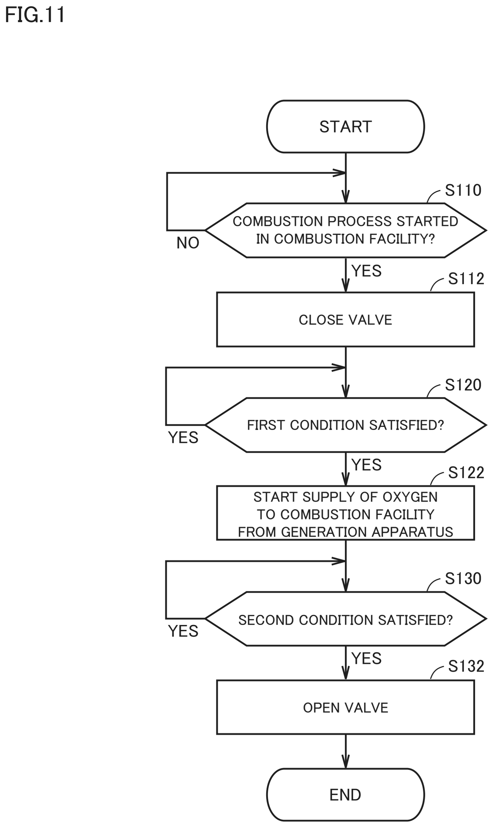

Next, the production flow of liquefied carbon dioxide gas will be described, with reference to FIG. 11. FIG. 11 is a flowchart showing the flow of control processing of the production facility 100.

The processing shown in FIG. 11 is realized by the controller 50 of the production facility 100 executing the abovementioned control program 122 (see FIG. 4). In another aspect, at least some of the processing may be executed by a circuit element or other hardware.

In step S110, the controller 50 determines whether the combustion process of the combustible material has started in the combustion facility 200. Whether the combustion process has started is determined by various methods. As one example, the controller 50 determines that the combustion process of the combustible material has started in the combustion facility 200 when a combustion start operation is received. If it is determined that the combustion process of the combustible material has started in the combustion facility 200 (YES in step S110), the controller 50 switches control to step S112. If this is not the case (NO in step S110), the controller 50 executes the processing of step S110 again.

In step S112, the controller 50 closes the abovementioned valve 30 (see FIG. 2). The combustion gas generated by the combustion facility 200 thereby circulates between the pipe F1, the pipe F3, the pipe F2, and the combustion facility 200.

In step S120, the controller 50 determines whether a first condition indicating that the carbon dioxide gas concentration of the combustion gas exceeds a predetermined concentration (e.g., concentration from 10% or more to 30% or less) is satisfied. Whether the first condition is satisfied is determined by various methods.

In one aspect, the controller 50 determines that the above first condition is satisfied, based on a predetermined time period having elapsed from when the combustion facility 200 starts combustion of the combustible material in step S110. The predetermined time period may be set in advance or may be freely set by the user. Alternatively, the predetermined time period may be automatically adjusted according to environmental conditions such as temperature and humidity.

In another aspect, the controller 50 determines that the above first condition is satisfied, based on the carbon dioxide gas concentration acquired from the concentration sensor 20 having exceeded a threshold value th1. The threshold value th1 is, for example, a value from 10% or more to 30% or less. The threshold value th1 may be set in advance or may be freely set by the user. Alternatively, the threshold value th1 may be automatically adjusted according to environmental conditions such as temperature and humidity.

If it is determined that the above first condition is satisfied (YES in step S120), the controller 50 switches control to step S122. If this is not the case (NO in step S120), the controller 50 executes the processing of step S120 again.

In step S122, the controller 50 starts supply of oxygen gas from the oxygen generation apparatus 300 to the combustion facility 200. A mixture of combustion gas and oxygen gas is thereby supplied to the combustion facility 200.

In this way, the controller 50 does not start supply of oxygen gas from the oxygen generation apparatus 300 to the combustion facility 200 until the above first condition is satisfied. As a result, the carbon dioxide gas concentration in the combustion gas is enhanced to about 10% to 30% by the time supply of oxygen gas is started. Since the mixture of combustion gas and oxygen gas is supplied to the combustion facility 200 after the carbon dioxide gas concentration in the combustion gas has been enhanced to about 10% to 30%, gas cylinders or the like for supplying carbon dioxide gas need not be provided in the combustion facility 200.

In step S130, the controller 50 determines whether a second condition indicating that the carbon dioxide gas concentration of the combustion gas exceeds a predetermined concentration (e.g., concentration from 80% or more to 95% or less) is satisfied. Whether the second condition is satisfied is determined by various methods.

In one aspect, the controller 50 determines that the above second condition is satisfied, based on a predetermined time period having elapsed from when the oxygen generation apparatus 300 starts supply of oxygen gas in step S122. The predetermined time period may be set in advance or may be freely set by the user. Alternatively, the predetermined time period may be automatically adjusted according to environmental conditions such as temperature and humidity.

In another aspect, the controller 50 determines that the above second condition is satisfied, based on the carbon dioxide gas concentration acquired from the concentration sensor 20 having exceeded a threshold value th2. The threshold value th2 is greater than the abovementioned threshold value th1. The threshold value th2 is, for example, a value from 80% or more to 95% or less. Preferably, the threshold value th2 is 90%. The threshold value th2 may be set in advance or may be freely set by the user. Alternatively, the threshold value th2 may be automatically adjusted according to environmental conditions such as temperature and humidity.

If it is determined that the above second condition is satisfied (YES in step S130), the controller 50 switches control to step S132. If this is not the case (NO in step S130), the controller 50 performs the processing of step S130 again.

In step S132, the controller 50 switches the abovementioned valve 30 (see FIG. 2) from closed to open. The combustion gas generated by the combustion facility 200 is thereby sent to the production apparatus 500, and high-purity liquefied carbon dioxide gas is produced from the combustion gas.

### <I. Simulation Results>

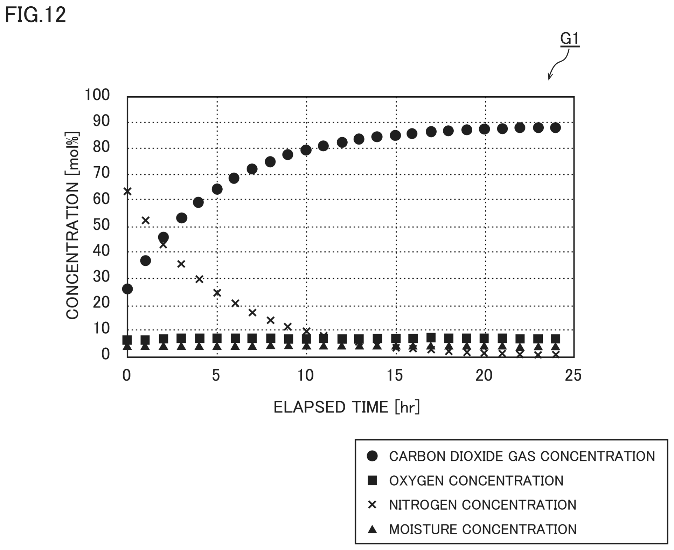

The inventors confirmed through simulation how the composition of the combustion gas changes, by continually supplying a mixture of the combustion gas generated by the combustion facility 200 and the oxygen gas generated by the oxygen generation apparatus 300 to the combustion facility 200. Hereinafter, the simulation results will be described, with reference to FIG. 12.

FIG. 12 is a diagram showing the simulation results with graph G1. Graph G1 shows the transition of carbon dioxide gas concentration in the combustion gas, the transition of oxygen concentration in the combustion gas, the transition of nitrogen concentration in the combustion gas, and the transition of moisture concentration in the combustion gas.

The horizontal axis of graph G1 represents elapsed time from when supply of oxygen gas from the oxygen generation apparatus 300 to the combustion facility 200 starts. The unit of elapsed time is indicated by "hr".

The vertical axis of graph G1 indicates the concentration of each gas in the combustion gas. The unit of concentration is indicated by "mol%", for example.

As shown in graph G1, the carbon dioxide gas concentration in the combustion gas increases over time, and ultimately rises to about 90%. The nitrogen concentration in the combustion gas declines over time, and ultimately approaches 0%. The oxygen concentration in the combustion gas, the nitrogen concentration in the combustion gas, and the moisture concentration in the combustion gas transition to less than 10%.

In this way, the inventors confirmed that the concentration of carbon dioxide gas in the combustion gas rises to about 90%, by continually supplying a mixture of the combustion gas generated by the combustion facility 200 and the oxygen gas generated by the oxygen generation apparatus 300 to the combustion facility 200.

When the carbon dioxide gas concentration rises to about 90%, the production apparatus 500 is able to produce liquefied carbon dioxide gas from the combustion gas, without using a concentration mechanism such as an adsorption separation apparatus or an amine absorption apparatus. That is, the production apparatus 500 is able to produce liquefied carbon dioxide gas by directly compressing and cooling the combustion gas supplied from the combustion facility 200.

### <J. Summary>

As described above, the abovementioned production facility 100 returns combustion gas generated by burning a combustible material in the combustion facility 200 to the combustion facility 200, and supplies oxygen gas generated by the oxygen generation apparatus 300 to the combustion facility 200. That is, the production facility 100 supplies a mixture of combustion gas and oxygen gas to the combustion facility 200, during combustion of the combustible material. The concentration of carbon dioxide gas in the combustion gas is enhanced, by the gas mixture being continually supplied to the combustion facility 200. The production apparatus 500 produces liquefied carbon dioxide gas from the combustion gas whose carbon dioxide gas concentration has been enhanced.

In this way, the production facility 100 raises the carbon dioxide gas concentration in the combustion gas, utilizing the combustion gas generated by the combustion facility 200. That is, the production facility 100 is able to raise the carbon dioxide gas concentration in the combustion gas, without supplying carbon dioxide gas from gas cylinders or the like. Liquefied carbon dioxide gas with high purity is thereby produced.

Also, the combustion gas whose carbon dioxide gas concentration has been enhanced is sent to the production apparatus 500, thus facilitating the production of liquefied carbon dioxide gas by the production apparatus 500. As a result, the configuration of the production apparatus 500 can be simplified, and the equipment scale of the production apparatus 500 can be reduced.

### <K. Other Matters>

As described above, by using the production facility 100 disclosed above, carbon dioxide gas in combustion furnace exhaust gas can be effectively utilized as liquefied carbon dioxide gas, dry ice and the like which are originally required, without releasing carbon dioxide gas directly into the atmosphere. Thus, it is possible to reduce global warming gases and contribute to some of the actions of the Sustainable Development Goals (SDGs).

The embodiments disclosed herein are to be considered in all respects as exemplary and not restrictive. The scope of the invention is indicated by the claims rather than by the above description, and all changes that come within the meaning and range of equivalency of the claims are intended to be embraced therein.

### List of Reference Numerals

20 Concentration sensor, 30 Valve, 50 Controller, 100 Production facility, 101 Control circuit, 102 ROM, 103 RAM, 104 Communication interface, 110 Bus, 120 Auxiliary storage device, 122 Control program, 200 Combustion facility, 300 Oxygen generation apparatus, 300A Cryogenic separation apparatus, 300B Adsorption separation apparatus, 302 Filter, 304 Compressor, 308 Adsorber, 310 Heat exchanger, 312 Rectification tower, 312A Lower tower, 312B Upper tower, 314 Argon purification apparatus, 332 Filter, 334 Blower, 336AAdsorption tower, 336B Adsorption tower, 338 Surge tank, 340 Vacuum pump, 400 Supply mechanism, 402 Dust collector, 404 Induced draft fan, 406 Mixing mechanism, 407 Baffle plate, 408 Air blower, 500 Production apparatus, 500A Production apparatus, 500B Production apparatus, 512 Carbon dioxide gas concentrator, 514 Compressor, 515 Adsorber, 516 Cooling mechanism, F1 Pipe, F2 Pipe, F3 Pipe, G1 Graph, P1 Branch point, P2 Branch point, V1 Valve, V2 Valve, V3 Valve, V4 Valve, V5 Valve, V6 Valve, V7 Valve, V8 Valve.

## Claims

1. A production facility for liquefied carbon dioxide gas, comprising:
a combustion facility for burning a combustible material;
a generation apparatus for generating oxygen;
a supply mechanism for returning combustion gas generated by burning the combustible material in the combustion facility to the combustion facility and supplying the oxygen to the combustion facility; and
a production apparatus for producing liquefied carbon dioxide gas from the combustion gas generated by the combustion facility.

2. The production facility according to claim 1,
wherein the supply mechanism includes
a first pipe connecting the combustion facility to the production apparatus;
a second pipe connecting the combustion facility to the generation apparatus; and
a third pipe branching from the first pipe and connected to the second pipe.

3. The production facility according to claim 2, further comprising:
a sensor for detecting a carbon dioxide gas concentration of the combustion gas;
a valve configured to open and close a flow channel between a branch point of the first and third pipes and the production apparatus; and
a controller configured to control the valve,
wherein the controller controls the valve to change the flow channel from closed to open when the carbon dioxide gas concentration increases to a predetermined value or more.

4. The production facility according to claim 1 or 2,
wherein the supply mechanism is configured to start supply of the oxygen to the combustion facility, after a predetermined time period from when the combustion facility starts burning the combustible material.

5. The production facility according to claim 1 or 2,
wherein the generation apparatus is a cryogenic separation apparatus configured to produce the oxygen from air by a cryogenic separation method.

6. The production facility according to claim 5,
wherein the cryogenic separation apparatus is configured to further produce at least one of liquid oxygen, liquid argon, and liquid nitrogen from the air by the cryogenic separation method.

7. The production facility according to claim 1 or 2,
wherein the generation apparatus is an adsorption separation apparatus configured to produce the oxygen from air by an adsorption separation method.

8. A production method for liquefied carbon dioxide gas, comprising:
a step of burning a combustible material in a combustion facility;
a step of generating oxygen;
a step of returning combustion gas generated by burning the combustible material in the combustion facility to the combustion facility and supplying the oxygen to the combustion facility; and
a step of producing liquefied carbon dioxide gas from the combustion gas generated by the combustion facility.
